## Europäisches Patentamt
## European Patent Office
## Office européen des brevets

(11) Veröffentlichungsnummer: **0 312 759**
**A1**

# EUROPÄISCHE PATENTANMELDUNG

(21) Anmeldenummer: **88114782.1**

(22) Anmeldetag: **09.09.88**

(51) Int. Cl.4: **B01D 29/12 , B01D 35/26 , E04H 3/20**

(30) Priorität: **11.09.87 DE 8712336 U**

(43) Veröffentlichungstag der Anmeldung:
**26.04.89 Patentblatt 89/17**

(84) Benannte Vertragsstaaten:
**AT BE CH DE ES FR IT LI NL**

(71) Anmelder: **BRUNO KERN GMBH**
**Johannesberger Strasse 40**
**D-8752 Mömbris/Ufr.(DE)**

(72) Erfinder: **Wuschik, Günther**
**Friedhofweg 9**
**D-8751 Leidersbach(DE)**

(74) Vertreter: **Schubert, Siegmar, Dipl.-Ing. et al**
**Patentanwälte Dr. V. Schmied-Kowarzik Dr.**
**P. Weinhold Dr.-Ing. G. Dannenberg Dr. D.**
**Gudel Dipl.-Ing. S. Schubert Dr. P. Barz**
**Grosse Eschenheimer Strasse 39**
**D-6000 Frankfurt am Main 1(DE)**

(54) **Filter zur Wasserreinigung, insbesondere von Schwimmbädern.**

(57) Um die Standzeit und das Schmutzaufnahmevermögen eines Filters zür Wasserreinigüng zu erhöhen, ist vorgesehen, daß in dem Filter (1 - 9) mehrere ebene Lagen (14 - 16) Schaumstoff mit in Durchflußrichtung (24) verringerten Porengrößen übereinanderliegen.

Fig.1

EP 0 312 759 A1

## Filter zur Wasserreinigung, insbesondere von Schwimmbädern.

Die Erfindung betrifft einen Filter zur Wasserreinigung, insbesondere von Schwimmbädern, mit offenporigem Schaumstoff als Filtermaterial.

Ein zum Stand der Technik gehörendes Filter ist als Kartuschenfilter ausgebildet, in dem eine Kartusche aus blattförmigem, im Querschnitt annähernd sternförmig gefaltetem Filtermaterial über ein zentrales Rohr gesteckt ist. Oberhalb der Kartusche ist ein ähnlich wie das Gehäuse geformtes oben offenes und unten mit einem Sieb abgeschlossenes Schwimmerteil teleskopisch gegenüber dem Gehäuse verschiebbar. Von einem Durchlaß am Boden das Kartuschenfilters führt eine Vorlaufleitung zu einer Pumpe, die außerhalb des Schwimmbeckens angeordnet sein kann und von der eine Rücklaufleitung in das Becken zurückführt. - Ein wesentlicher Nachteil des Kartuschenfilters besteht darin, daß die Filtration praktisch nur an einer Fläche des Papier-oder Polyestervliess stattfindet, aus dem die Kartusche gefaltet ist. An den engsten inneren Stellen der Falten kann das Kartuschenfilter weitgehend wirkungslos sein, da hier das zu filternde Wasser kaum durch die Filterfläche strömen kann. Da die Filtration praktisch nur an der äußeren Oberfläche der Kartusche stattfinden kann, setzt sich diese Oberfläche - abhängig von der Qualität des zu filternden Wassers - verhältnismäßig rasch zu. Die Standzeit und das Schmutzaufnahmevermögen sind verhältnismäßig gering. Bei dem im Verlaufe des Gebrauchs des Kartuschenfilters erfolgenden Zusetzen der Oberfläche erhöht sich der Strömungswiderstand des Kartuschenfilters, wodurch die wirksam werdende Leistung der Pumpe und damit die Beckendurch strömung herabgesetzt wird. Eine entsprechend lange Umwälzzeit ist die Folge.

Diese Nachteile werden bei einem anderen bekannten Filter, in dem offenporiger Schaumstoff als Filtermaterial verwendet wird, verringert,aber noch nicht weitgehend ausgeschlossen. Das Filtermaterial weist nämlich eine über dessen Stärke in Durchströmrichtung gesehen gleichbleibende Verteilung der Porengröße auf. Dadurch bedingt setzt das Filter an der äußeren Oberfläche und den benachbarten Teilen am stärksten zu, während die Schmutzaufnahme zum Inneren des Filtermediums hin abnimmt. Dieses Verhalten begrenzt unter anderem das Schmutzaufnahmevermögen und die Standzeit des Filters.

Der vorliegenden Erfindung liegt daher die Aufgabe zugrunde, ein Filter zur Wasserreinigung, insbesondere von Schwimmbädern, der eingangs genannten Gattung so weiterzubilden, daß die Standzeit und das Schmutzaufnahmevermögen erhöht werden. Für das Filter sollen also verhältnismäßig lange Wartungsintervalle genügen, und auch dann soll die Wartung unkompliziert sein.

Diese Aufgabe wird nach der Erfindung dadurch gelöst, daß als Filter mehrere Lagen Schaumstoff mit in Durchflußrichtung verringerten Porengröße übereinander liegen. Bei einer Durchströmung des Filters von oben nach unten weist also die oberste Lage Schaumstoffporen mit dem größten Durchmesser auf, daran anschließend darunter liegende Lagen verringerter Porengröße, wobei die unterste Lage die kleinste Porengröße hat. Die Lagen können so dimensioniert werden, daß bei einer gegebenen Wasserqualität das Filter über seine Tiefe in Strömungsrichtung gesehen annähernd gleichmäßig Schmutz ausfiltert. Mit anderen Worten, es tritt eine räumliche Filtration ein, bei der alle Volumen teile des Filters annähernd gleichmäßig belastet werden. Dadurch zeichnet sich das Filter durch ein hohes Schmutzaufnahmevermögen und eine lange Standzeit aus. Wegen dieser räumlichen Filterwirkung und der ebenen Ausbildung der einzelnen Lagen wirken sich Fertigungstoleranzen kaum auf das Filterverhalten aus. Die Handhabung der ebenen Lagen beim Austausch des Filtermaterials ist sehr einfach. Die Lagen können außerdem leicht gereinigt werden, indem sie ähnlich wie ein Schwamm ausgewaschen werden. Somit ergeben sich geringe Kosten für die Unterhaltung des Filters. Aus der räumlichen Filterwirkung ergeben sich die weiteren Vorteile, daß sich das Filter auch bei falscher Wasserreinigung nicht sofort zusetzen kann. Es treten bei der Filtration nur geringe Druckverluste auf, wodurch die nutzbare Pumpenleistung, die sich daraus ergebende Beckendurchströmung und die Umwälzzeit optimiert werden. Beim Einsatz des Filters zum Bodenabsaugen wirkt sich auch dort das erhöhte Saugverhalten positiv aus. - Ein besonderer Vorteil besteht darin, daß aufgrund der Wahl des Schichtaufbaus eine Anpassung an spezielle Anforderungen mit geringem Aufwand erfolgen kann.

Zweckmäßig können sich die einzelnen Lagen des Schichtaufbaus nicht nur durch die in Durchflußrichtung verringerten Porengrößen auszeichnen, sondern darüber hinaus durch unterschiedliche Stärke der Lagen. Damit kann weiter die räumlich gleichmäßige Belastung des Schichtaufbaus mit den ausgefilterten Stoffen optimiert werden.

Für verhältnismäßig kleine Filter mit einem Durchsatz von typischerweise 2 m³/h ist bereits ein Schichtaufbau mit drei Lagen geeignet, deren Kenngrößen - Stärke der Lagen sowie Porendurchmesser des sie bildenden Filtermaterials -in Anspruch 3 angegeben sind. Zur Erläuterung wird bemerkt, daß bei der Angabe PPI von "pores per inch" ausgegangen wurde, woraus der entsprechende Porendurchmesser errechnet wurde.

Für größere Filter mit einem Durchsatz von etwa 4 m³/h ist ein Filteraufbau mit fünf Lagen besonders geeignet, deren Kenngrößen in Anspruch 4 angegeben sind. Dieser Schichtaufbau hat also insgesamt eine größere Stärke in Strömungsrichtung, wodurch die Schmutzaufnahmekapazität in dem Gesamtvolumen des Schichtaufbaus vergrößert ist, wenn die Porendurchmesser, wie für typisches Schwimmbadwasser angegeben, abgestuft sind.

Die Lagen bestehen vorteilhaft aus Schaumstoff aus offenporigem recticulierten Polyurethanschaum. Wichtig ist in jedem Fall die möglichst vollständige Offenporigkeit des Filtermaterials, die durch eine Nachbehandlung des Filterschaums erreicht werden kann. Der Schaumstoff aus offenporigem recticulierten Polyurethanschaum zeichnet sich durch gute Beständigkeit gegenüber Wasser und Feuchtigkeit aus und hat gute Festigkeitseigenschaften.

Ein kompakter, die Wartung vereinfachender Aufbau des Filters mit den ebenen Lagen Schaumstoff, die in dem Gehäuse parallel zu dessen Querschnittsebenen angeordnet sind, ist in Anspruch 6 angegeben. In diesem Filter werden die Lagen des Schichtaufbaus praktisch rechtwinklig zu den Querschnittsebenen wirkungsvoll durchflossen.

Das Filter kann weiter vorteilhaft nach Anspruch 7 mit einer direkt angesetzten Pumpe vervollständigt werden. Daraus ergibt sich ein kompakter Aufbau der gesamten Filteranlage, denn es entfällt eine gesonderte Pumpe mit Motor, die über eine Leitung mit dem Schwimmbadgehäuse in Verbindung steht und eine Rücklaufleitung zum Beckeninneren hin aufweist. Daraus ergibt sich der weitere Vorteil, daß die Pumpe mit dem Filter in dem Becken eintauchen kann, und die Wärmeabfuhr von dem Elektromotor durch das ihn mittelbar oder unmittelbar umgebende Wasser optimiert wird.

Die Erfindung wird im folgenden anhand einer Zeichnung erläutert, in der ein in einem Becken eingehängtes Filter in einem Längsschnitt gezeigt ist.

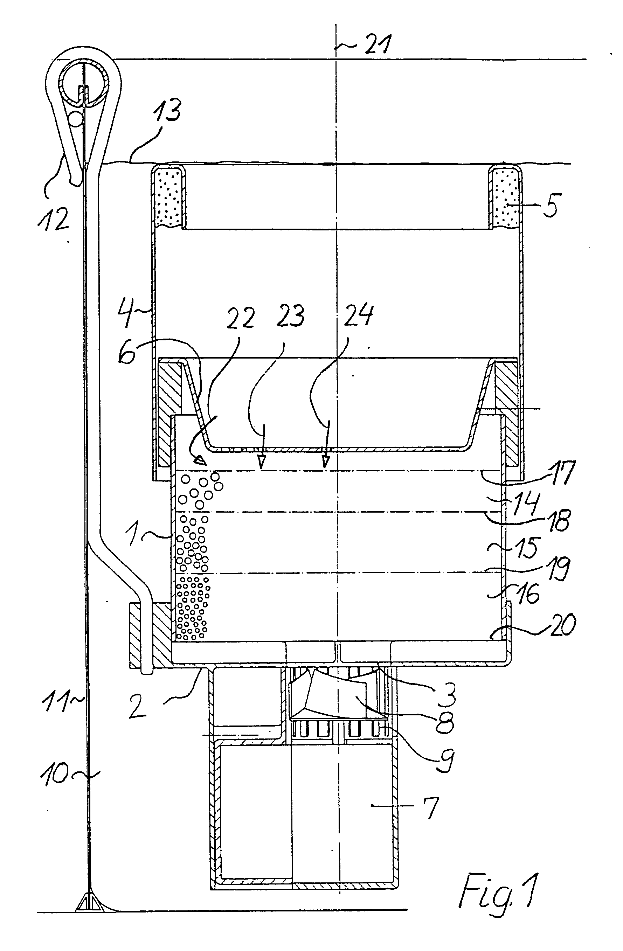

In Fig. 1 ist mit 1 ein zylindrisches Gehäuse eines Filters bezeichnet, welches oben offen ist und an seinem Boden 2 einen Durchlaß 3 aufweist. An einem oberen Abschnitt des Gehäuses ist ein ähnlich wie dieses zylindrisch geformtes Schwimmerteil 4 teleskopisch verschiebbar gelagert. Das Schwimmerteil weist an seinem oberen Abschnitt einen ringförmigen Auftriebskörper 5 sowie an seinem unteren Ende ein topfförmig ausgebildetes Grobfilter 6 auf. An dem bodenseitigen unteren Ende des Gehäuses 1 sind ein Elektromotor 7 sowie eine von diesem angetriebene Pumpe 8 angeordnet, und zwar so, daß die Pumpe durch den direkt über ihr liegenden Durchlaß 3 gespeist werden kann. Über etwa 2/3 des Umfangs des - nicht bezeichneten - Pumpengehäuses ist dieses mit vertikal gerichteten Lamellen 9 so versehen, daß eine durch die Lamellen infolge der Pumpenwirkung hindurchtretende, im wesentlichen horizontale Strömung in einem Becken 10 zirkuliert. Das Becken 10 ist in der Zeichnung nur als Ausschnitt dargestellt. An eine Beckenwand 11 kann das gesamte Filter mittels eines Aufhängers 12 oben aufgehängt werden. Die Wasseroberfläche des Schwimmbads ist mit 13 bezeichnet.

In das Gehäuse 1 sind als Filtermaterialien scheibenförmige runde Lagen Schaumstoff 14-16 übereinander, einen Schichtaufbau bildend, eingelegt. Die ebenen Oberflächen 17-20 der Lagen liegen dabei in Querschnittsebenen des Filters, dessen Längsachse mit 21 bezeichnet ist. Die Lagen Schaumstoff 14, 15, 16 weisen abgestufte Porengrößen auf, und zwar liegt die größte Porengröße von beispielsweise 2,5 mm Durchmesser in der Lage 14 vor, eine mittlere Porengröße von beispielsweise 0,56 mm in der mittleren Lage 15 und die kleinste Porengröße von beispielsweise 0,32 mm in der untersten Lage 16. Wie aus der Zeichnung ersichtlich ist, besitzt die obere Lage 14 eine geringere Stärke als die darunter liegenden Lagen 15 und 16. Beispielsweise kann die obere Lage 14 20 mm stark sein, während die darunter liegenden Lagen 15 und 16 übereinstimmend eine Stärke von 30 mm haben. Dieser Aufbau eignet sich besonders für ein Filter mit einem Durchmesser von etwa 10 cm, kann aber auch für größere Filter mit größeren Durchmessern vorgesehen werden.

Der Schichtaufbau läßt sich in dem Gehäuse 1 auch leicht ändern, insbesondere kann dort ein Filteraufbau mit fünf Lagen eingesetzt werden.

In dem mit Wasser gefüllten Becken 10 erfährt das Schwimmerteil 4 einen so großen Auftrieb, daß an seinem oberen nicht bezeichneten Rand an dem Auftriebskörper eine vorgesehene Menge Wasser annähernd stetig einströmt. Der Durchfluß des Wassers erfolgt weiter im wesentlichen parallel zu der Längsachse 21 durch das Grobsieb 6 - siehe z.B. Pfeile 22, 23, 24-in den Raum des Gehäuses 1 hinein, in dem die Lagen offenporigen Schaumstoffs 14-16 eingelegt sind. Das die Lagen, über deren Querschnitt gesehen, annähernd gleichmäßig durchströmende, belastete Wasser wird in allen drei Lagen 14-16 räumlich gefiltert, indem in der obersten Lage 14 zunächst die verhältnismäßig groben Schmutzteilchen, in der darunter liegenden Lage 15 die feineren Teilchen und in der untersten Lage 16 die feinsten Teilchen ausgefiltert werden. Die Stärke der drei Lagen 14, 15 und 16 ist dazu zweckmäßig entsprechend der zu erwartenden Häufigkeitsverteilung der Teilchengrößen gewählt worden. Das gefilterte Wasser wird mittels der Pumpe 8 durch den Durchlaß 3 angesaugt und in eine zirkulierende Strömung durch die Lamellen 9 versetzt.

Wie in Fig. 1 angedeutet, ist das beschriebene Filter auch besonders für kleine Becken geeignet.

**Ansprüche**

1. Filter zur Wasserreinigung, insbesondere von Schwimmbädern,mit offenporigem Schaumstoff als Filtermaterial,
**dadurch gekennzeichnet,**
daß in dem Filter (1-9) mehrere ebene Lagen (14-16) Schaumstoff mit in Durchflußrichtung (24) verringerten Porengrößen übereinander liegen.

2. Filter nach Anspruch 1,
**dadurch gekennzeichnet,**
daß die Lagen (14-16) in Durchflußrichtung (24) zunehmende Stärken aufweisen.

3. Filter nach Anspruch 1 oder 2,
**gekennzeichnet durch**
drei Lagen mit folgenden Kenngrößen:
1. Lage: Stärke 20 mm, Porendurchmesser ca. 2,5 mm (10 PPI)
2. Lage: Stärke 30 mm, Porendurchmesser ca. 0,56 mm (45 PPI)
3. Lage: Stärke 30 mm, Porendurchmesser ca. 0,32 mm (80 PPI)

4. Filter nach Anspruch 1 oder 2,
**gekennzeichnet durch**
fünf Lagen mit folgenden Kenngrößen:
1. Lage: Stärke 20 mm, Porendurchmesser ca. 2,5 mm(10 PPI)
2. Lage: Stärke 30 mm, Porendurchmesser ca. 1,27 mm (20 PPI)
3. Lage: Stärke 30 mm, Porendurchmesser ca. 0,85 mm (30 PPI)
4. Lage: Stärke 30 mm, Porendurchmesser ca. 0,42 mm (60 PPI)
5. Lage: Stärke 30 mm Porendurchmesser ca. 0,32 mm (80 PPI)

5. Filter nach einem der vorangehenden Ansprüche,
**dadurch gekennzeichnet,**
daß die Lagen (14-16) Schaumstoff aus offenporigem recticulierten Polyurethanschaum bestehen.

6. Filter nach einem der vorangehenden Ansprüche in einem oben offenen, insbesondere zylindrischen Gehäuse, demgegenüber ein ähnlich geformtes,oben offenes und unten mit einem Sieb abgeschlossenes Schwimmerteil teleskopisch verschiebbar ist,
**dadurch gekennzeichnet,**
daß in dem Gehäuse (1-9) parallel zu dessen Querschnittsebenen die Lagen (14-16) die Lagen Schaumstoff angeordnet sind.

7. Filter nach Anspruch 6,
**dadurch gekennzeichnet,**
daß an einem mit einem Durchlaß (3) versehenen Boden (2) des Gehäuses eine mit einem Elektromotor (7) gekuppelte Pumpe (8), welche vertikale Lamellen (9) aufweist, mit dem Durchlaß (3) direkt in Verbindung steht.

4

Fig.1

R. Kern

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | AT-B- 315 204 (H. HERLT) <br> * Anspruch; Seite 2, Zeilen 41-44; Figur * <br> --- | 1,2 | B 01 D 29/12 <br> B 01 D 35/26 <br> E 04 H 3/20 |
| A | DE-U-8 704 480 (OASE-PUMPEN WÜBKER SÖHNE) <br> * Ansprüche 1,2; Seite 5, Absatz 3; Figur * <br> --- | 1,2,7 | |
| A | EP-A-0 060 677 (AMSTED) <br> * Seite 4, Zeilen 19-20 * <br> --- | 5 | |
| A | DE-U-1 940 698 (A. KRÜLL) <br> * Anspruch 1; Figur 1 * <br> ----- | 6 | |
| | | | **RECHERCHIERTE SACHGEBIETE (Int. Cl.4)** <br><br> B 01 D 29/12 <br> B 01 D 35/26 <br> B 01 D 37/00 <br> B 01 D 39/16 <br> E 04 H 3/20 |

Der vorliegende Recherchenbericht wurde für alle Patentansprüche erstellt

| Recherchenort | Abschlußdatum der Recherche | Prüfer |
|---|---|---|
| BERLIN | 30-12-1988 | KUEHN P |